# EUROPÄISCHE PATENTSCHRIFT

(11) **EP 2 845 461 B1**
(45) Veröffentlichungstag und Bekanntmachung des Hinweises auf die Patenterteilung: **10.01.2018**
(21) Anmeldenummer: 14172884.0
(22) Anmeldetag: 18.06.2014
(51) Int. Cl.: A01D 41/127

(54) **Anordnung zur Verlustmessung in einem Mähdrescher**
Assembly for measuring loss in a combine harvester
Agencement de mesure de perte dans une moissonneuse-batteuse

(30) Priorität: 31.07.2013 DE 102013214984
(43) Veröffentlichungstag der Anmeldung: 11.03.2015
(73) Patentinhaber: Deere & Company, Moline, IL 61265 (US)
(72) Erfinder: Fuchs, Volker, 54439 Saarburg (DE); Wilde von Wildemann, Philipp, 66459 Kirkel ot Limbach (DE); Bollin, Douglas J, 67661 Kaiserslautern (DE)
(74) Vertreter: Holst, Sönke

(56) Entgegenhaltungen:
- EP-A1- 2 005 813
- WO-A1-80/01532
- DE-A1- 2 448 745
- GB-A- 1 157 337
- GB-A- 1 401 878
- US-A- 3 606 745
- US-A- 4 951 031

## Beschreibung

Die Erfindung betrifft einen Mähdrescher mit einer Drescheinrichtung, einer Trenneinrichtung, einer Reinigungseinrichtung, einer Fördereinrichtung für Korn, welche das von der Trenneinrichtung abgeschiedene Material sammelt und es zur Reinigungseinrichtung transportiert und einer Anordnung zur Verlustmessung, welche mit einem Körnerstromsensor zur Erfassung der Intensität eines in der Trenneinrichtung des Mähdreschers abgeschiedenen Körnerstroms und einer Kontrolleinheit zur Berechnung eines Körnerverlustwerts anhand der Signale des Körnerstromsensors ausgestattet ist.

### Stand der Technik

Landwirtschaftliche Mähdrescher dienen zur Ernte von Getreide und anderen Körnern. Auf einem Feld stehende oder liegende Pflanzen werden mittels eines Erntevorsatzes abschnitten oder aufgenommen und mittels eines Schrägförderers in das Innere des Mähdreschers transportiert. Dort werden die Pflanzen gedroschen und einem Trennsystem zugeführt. Im Dresch- oder Trennprozess abgeschiedenes Korn wird in einem Reinigungssystem gereinigt und temporär in einem Korntank abgelegt, um es später auf ein Transportfahrzeug zu überladen.

Der Dreschprozess erfolgt üblicherweise mittels einer Tangentialdreschtrommel oder im Dreschabschnitt eines axialen Dresch- und Trennrotors. Der Trennprozess erfolgt in der Regel mittels Trenntrommeln und einem Strohschüttler eines tangentialen Mehrtrommeldreschwerks oder eines stromab eines Tangentialdreschwerks angeordneten Trennrotors oder im Trennabschnitt eines axialen Dresch- und Trennrotors. Am Ende des Trennprozesses wird das ausgedroschene Stroh entweder in einem Schwad auf dem Feld abgelegt, um es später mit einer Ballenpresse aufzunehmen und zu Ballen zu pressen oder es wird durch einen Strohhäcksler geleitet, um schließlich über die Breite des Erntevorsatzes auf dem Feld verteilt zu werden.

Beim Trennprozess verbleibt ein gewisser Anteil an Korn im Stroh und wird auf das Feld ausgeworfen. Dabei entstehen einerseits unerwünschte, den Ertrag mindernde Verluste und andererseits später zu bekämpfender Pflanzenwuchs durch keimendes Korn. Es ist daher wünschenswert, die Menge an Verlustkorn im Stroh am Ende des Trennprozesses zu erfassen, um ggf. Gegenmaßnahmen treffen zu können, wie eine Verminderung der Fahrgeschwindigkeit oder geänderte Einstellungen der Dresch- und/oder Trenneinrichtung. Im Stand der Technik wird für diesen Zweck am rückwärtigen Ende des Strohschüttlers ein Prallplattensensor angebracht (DE 24 48 745 A1, der das beim Aufprall von Verlustkörnern erzeugte Geräusch erfasst. Analog wird in der GB 1 157 337 A vorgeschlagen, einen Prallplattensensor direkt im Ende einer Rücklaufpfanne eines der mittleren Strohschüttlergitter anzubringen. Hierbei ist als nachteilig anzusehen, dass die Messwerte relativ ungenau sind, da einerseits die Anzahl der erfassbaren Körner bei korrekter Einstellung und Arbeitsweise des Mähdreschers relativ klein ist, und andererseits die Körner größtenteils im Stroh eingebettet sind und somit nicht durch den Prallplattensensor erfasst werden können. Man führt deshalb üblicherweise zunächst eine Kalibrierung durch, in welcher die Anzeigewerte einer Verlustanzeigeeinrichtung und die tatsächlichen Verluste auf dem Feld erfasst werden, z.B. mittels einer Verlustprüfschale, und fährt dann mit einer Geschwindigkeit weiter, die auf der Verlustanzeigeeinrichtung zu einem akzeptablen Verlust führt.

Die WO 80/01532 beschreibt einen Axialmähdrescher, bei dem die im rückwärtigen Bereich des Dresch- und Trennrotors durch den Separierkorb hindurch laufenden Körner durch einen Förderboden erfasst und einem Prallplattensensor zugeführt werden. Die Menge der durch den Prallplattensensor erfassten Körner wird als Maß für die Verluste angesehen. Hier wird demnach ein separater Förderboden benötigt, um die Körner zu erfassen und dem Prallplattensensor zuzuführen.

Die US 4 951 031 A schlägt zur Lösung dieses Problems vor, die Dresch- und Trenneinrichtung mit einer Anzahl an Körnerstromsensoren auszustatten, die an unterschiedlichen Stellen entlang des Weges des Ernteguts durch die Dresch- und Trenneinrichtung jeweils die Menge der abgeschiedenen Körner erfassen. Anhand der Messwerte wird eine Abscheidekurve berechnet, um Situationen zu erkennen, in denen im rückwärtigen Bereich der Trenneinrichtung ein relativ hoher Anteil an Korn abgeschieden wird. Bei diesen Situationen liegen erfahrungsgemäß auch hohe Verluste vor, denn das Stroh enthält im rückwärtigen Bereich der Trenneinrichtung noch relativ viel Korn, das schließlich zumindest teilweise auch auf das Feld ausgestoßen wird. Eine ähnliche Anordnung findet sich in DE 101 62 354 A1. Die Körnerstromsensoren erfassen hier auf Grund ihrer begrenzten Abmessungen jedoch ebenfalls nur relativ kleine Körneranzahlen, die nicht immer repräsentativ sind, um hinreichend genaue Verlustangaben zu liefern.

### Aufgabe der Erfindung

Die der Erfindung zu Grunde liegende Aufgabe wird darin gesehen, eine Anordnung zur Verlustmessung in einem Mähdrescher bereitzustellen, welche die erwähnten Probleme nicht oder in vermindertem Maße aufweist.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Anordnung zur Verlustmessung in einem Mähdrescher umfasst einen Körnerstromsensor zur Erfassung der Intensität eines in einer Trenneinrichtung des Mähdreschers abgeschiedenen Körnerstroms und eine Kontrolleinheit zur Berechnung eines Körnerverlustwerts anhand der Signale des Körnerstromsensors. Der Körnerstromsensor ist einer zwischen der Trenneinrichtung und einer Reinigungseinrichtung angeordneten Fördereinrichtung für Korn zugeordnet.

Die Fördereinrichtung sammelt das von der Trenneinrichtung abgeschiedene Material (Korn) und transportiert es zu einem einlassseitigen, als Vorsieb, Förderboden oder Schneckenförderer ausgeführten Element der Reinigungseinrichtung. In einem Abschnitt des Wegs des

Materials durch die Fördereinrichtung ist der Körnerstromsensor angeordnet. Der Körnerstromsensor erfasst somit das gesammelte Material, das durch die Fördereinrichtung von der Trenneinrichtung zur Reinigungseinrichtung gefördert wird. Auf diese Weise erreicht man, dass der Körnerstromsensor einem größeren Materialstrom ausgesetzt ist als im Stand der Technik, in dem er nur die Verluste am Auslass der Trenneinrichtung oder nur einen direkt von der Trenneinrichtung auf ihn treffenden Materialstrom erfasst. Somit wird durch den Körnerstromsensor ein größeres und zuverlässigeres Signal bereitgestellt, das die Bestimmung und Anzeige eines zuverlässigeren Verlustwerts als bisher ermöglicht.

Der Körnerstromsensor erfasst den Körnerstrom stromab der Fördereinrichtung oder innerhalb der Fördereinrichtung. Insbesondere kann er stromab oder innerhalb eines Förderbodens oder einer Rücklaufwanne der Trenneinrichtung angeordnet werden. Die Trenneinrichtung kann einen Strohschüttler oder einen Trennrotor umfassen.

Vorzugsweise ist die Kontrolleinrichtung mit einem Gesamtkornflusssensor zur Erfassung des gesamten Kornflusses im Mähdrescher verbunden und bestimmt den Körnerverlustwert anhand der Signale des Körnerstromsensors und des Gesamtkornflusssensors. Dazu können in der Kontrolleinheit für unterschiedliche Gesamtkornflüsse jeweils zugehörige Verlustkurven oder -tabellen abgespeichert sein, anhand derer die Kontrolleinheit bei gegebenem vom Körnerstromsensor erfasstem Körnerstrom den jeweiligen Verlust bestimmen kann.

### Ausführungsbeispiel

In den Zeichnungen sind zwei nachfolgend näher beschriebene Ausführungsbeispiele der Erfindung dargestellt. Es zeigt:
- Fig. 1: eine schematische seitliche Ansicht einer ersten Ausführungsform eines Mähdreschers mit einer erfindungsgemäßen Anordnung zur Verlustmessung, und
- Fig. 2: eine schematische seitliche Ansicht einer zweiten Ausführungsform eines Mähdreschers mit einer erfindungsgemäßen Anordnung zur Verlustmessung.

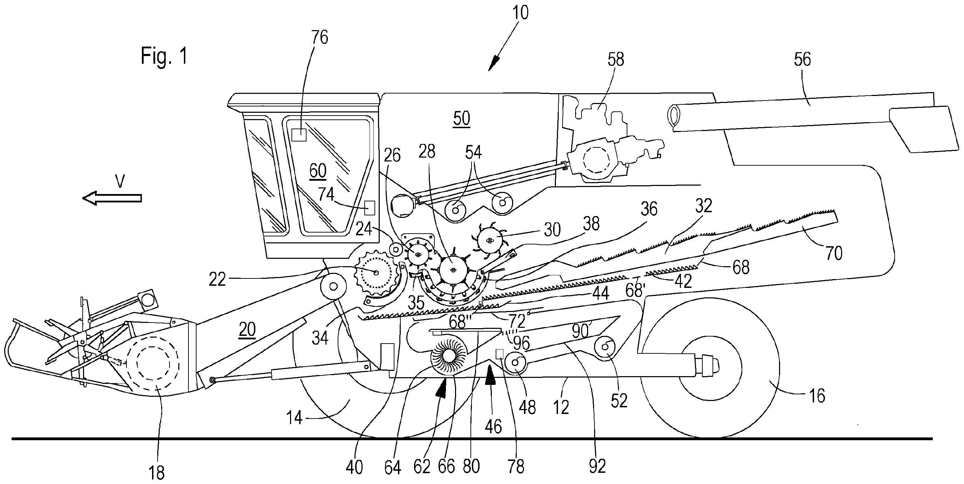

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10
im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32 mit mehreren, seitlich nebeneinander angeordneten Hordenschüttlern. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

Unterhalb des Mehrtrommeldreschwerks befindet sich ein vorderer Förderboden 40, der im Betrieb in eine abwechselnd nach vorn und hinten gerichtete Schwingbewegung durchführt. Ein hinterer Förderboden 42 ist unterhalb des Strohschüttlers 32 angeordnet und vollführt im Betrieb ebenfalls eine abwechselnd nach hinten und vorn gerichtete Schwingbewegung. Der vordere Förderboden 40 transportiert das durch den Dreschkorb 34 und durch den Separierkorb 36 des Tangentialseparators 28 nach unten hindurch tretende Gemisch aus Korn und Spreu nach hinten, während der hintere Förderboden 42 das durch den Strohschüttler 32 hindurch strömende Gemisch aus Korn und Spreu nach vorn transportiert. Der hintere Förderboden 42 übergibt sein Gemisch an seinem vorderen Ende an den vorderen Förderboden 40, der es durch einen rückwärtigen Fingerrechen 44 nach unten abgibt. Das vom vorderen Förderboden 40 abgegebene Gemisch gelangt dann in eine Reinigungseinrichtung 46.

Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden.

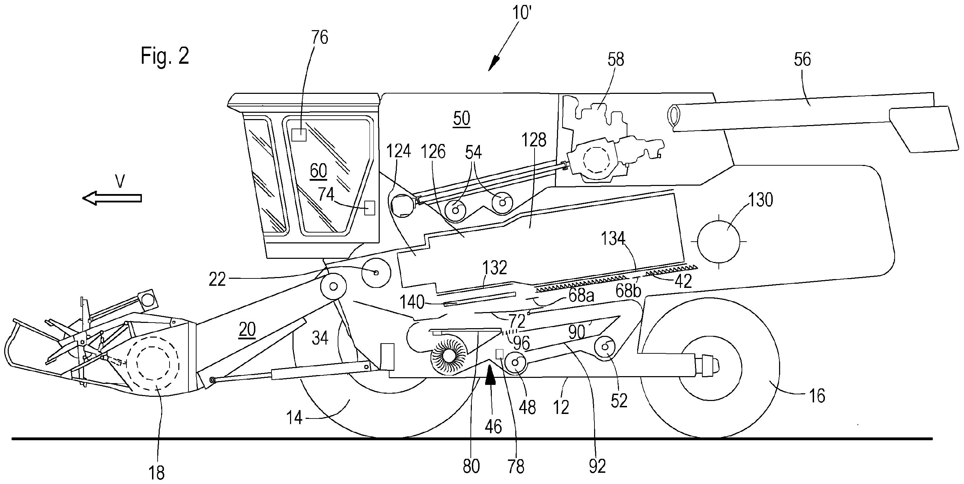

Die Reinigungseinrichtung 46 umfasst ein Gebläse 62, das sich aus einem in Drehung (in der Figur 2 im Gegenuhrzeigersinn) versetzbaren Rotor 64 und einem den Rotor 64 umschließenden Gehäuse 66 zusammensetzt. Weiterhin umfasst die Reinigungseinrichtung 46 ein Vorreinigungssieb 72 mit in einem Siebrahmen abgestützten, dort um ihre Längsachse im Winkel verstellbar gelagerten Sieblamellen, das sich unterhalb des Fingerrechens 44 befindet und sich näherungsweise von der rückwärtigen Kante des vorderen Förderbodens 40 horizontal nach hinten und geringfügig nach oben erstreckt.

Unterhalb der vorderen Hälfte des Vorreinigungssiebs 72 befindet sich ein Förderboden 80, unter dem wiederum der obere Teil des Gehäuses 66 des Gebläses 62 angeordnet ist. Rückwärtig des Förderbodens ist ein Rost 96, dem ein Obersieb 90 und ein darunter angeordnetes Untersieb 92 folgt. Das Obersieb 90 und das Untersieb 92 umfassen jeweils in einem Rahmen angeordnete, um ihre Längsachse im Winkel unabhängig voneinander verstellbare Sieblamellen. Weitere Einzelheiten der Reinigungseinrichtung 46 sind der DE 10 2005 026 608 A1 entnehmbar. Es können auch beliebige, andere Reinigungseinrichtungen Verwendung finden. Insbesondere könnte das Vorsieb 72 durch einen Förderboden oder Schneckenförderer ersetzt werden.

Um die Verluste in der Trenneinrichtung, die bei der Ausführungsform nach Figur 1 durch den Tangentialseparator 28 und den Strohschüttler 32 gebildet wird, zu ermitteln, ist ein Körnerstromsensor 68 vorgesehen, der sich unterhalb des vorderen Endes einer Rücklaufwanne 70 befindet, die unterhalb des rückwärtigen Bereichs des Strohschüttlers 32 angeordnet ist und dazu dient, dort abgeschiedenes Korn zum Förderboden 42 zu fördern. Der Körnerstromsensor 68 befindet sich innerhalb einer Fallstufe, die das Korn zwischen der Rücklaufwanne 70 und dem Förderboden 42 zurücklegt. Aufprallende Körner verursachen auf dem Körnerstromsensor 68, der als konventioneller Prallplattensensor ausgebildet sein kann, somit gut nachweisbare Schwingungen.

Ein zusätzlicher oder alternativ vorgesehener Körnerstromsensor 68' befindet sich innerhalb des Förderbodens 42, insbesondere etwa am Anfang des rückwärtigen Drittels. Der Körnerstromsensor 68' liegt in der Ebene des Förderbodens 42 und erfasst die beim Fördervorgang durch auf ihn aufprallende Körner verursachten Schwingungen. Er kann ebenfalls als Prallplattensensor ausgebildet sein.

Ein zusätzlicher oder alternativ vorgesehener Körnerstromsensor 68" befindet sich innerhalb einer Fallstufe, die das Korn zwischen dem Förderboden 42 und dem vorderen Förderboden 40 zurücklegt. Aufprallende Körner verursachen auf dem Körnerstromsensor 68", der ebenfalls als konventioneller Prallplattensensor ausgebildet sein kann, somit gut nachweisbare Schwingungen.

Die Körnerstromsensoren 68, 68' und/oder 68" sind signalübertragend mit einer Kontrolleinheit 74 verbunden, die ihrerseits mit einer Anzeigeneinheit 76 verbunden ist. Die Kontrolleinheit 74 ist außerdem mit einem Gesamtkornflusssensor 78 verbunden, der im dargestellten Ausführungsbeispiel der Körnerschnecke 48 zugeordnet ist und ihr Antriebsmoment erfasst. Der Gesamtkornflusssensor 78 könnte bei einer anderen Ausführungsform den Kornfluss durch Lichtschranken im Körnerelevator (nicht gezeigt) erfassen, der sich zwischen der Körnerschnecke 48 und dem Korntank 50 befindet.

Die Kontrolleinheit 74 erhält im Erntebetrieb Signale von einem oder mehreren der Körnerstromsensoren 68, 68' und/oder 68". Diese Signale werden von einem relativ großen, durch die Rücklaufwanne 70 und den Förderboden 42 integrierten Fluss des Korns stromauf, stromab oder innerhalb des hinteren Förderbodens 42 generiert und sind daher recht zuverlässig. Die Kontrolleinheit 74 wird somit mit Signalen hinsichtlich der im hinteren Drittel (Körnerstromsensor 68) oder in den hinteren zwei Dritteln (Körnerstromsensor 68') oder im gesamten Strohschüttler 32 (Körnerstromsensor 68") abgeschiedenen Korns beaufschlagt. Diese Signale werden durch die Kontrolleinheit 74 in Verlustwerte umgerechnet. Dazu können für unterschiedliche Gesamtkornflüsse, die mit dem Gesamtkornflusssensor 78 erfasst werden, zugehörige Verlustkurven aus einem Speicher der Kontrolleinheit 74 abgerufen werden und der aktuelle Verlustwert für das Signal des Körnerstromsensors 68, 68' oder 68" aus der jeweils gültigen Verlustkurve ausgelesen und auf der Anzeigeneinheit 76 dargestellt werden. Alternativ oder zusätzlich kann die Kontrolleinrichtung 74 mit zwei an unterschiedlichen Stellen der Fördereinrichtung angeordneten Körnerstromsensoren (z.B. 68 einerseits und 68' und/oder 68" andererseits oder 68' einerseits und 68" andererseits) verbunden werden und anhand der Signale der unterschiedlichen Körnerstromsensoren eine Abscheidekurve und anhand der Abscheidekurve einen Verlustwert generieren. Hierzu sei auf den Stand der Technik nach US 4 951 031 A und DE 101 62 354 A1 verwiesen.

Es wäre auch denkbar, die Kontrolleinheit 74 zusätzlich mit konventionellen Verlustsensoren für die Reinigung zu verbinden, um auch die Reinigungsverluste (und/oder einen kumulierten Verlustwert) auf der Anzeigeneinheit 76 anzeigen zu können.

Bei der Ausführungsform des Mähdreschers 10' nach Figur 2 sind mit der ersten Ausführungsform übereinstimmende Elemente mit denselben Bezugszeichen gekennzeichnet. Der wesentliche Unterschied liegt darin, dass das Mehrtrommeldreschwerk mit nachgeordnetem Strohschüttler 32 durch einen Axialdresch- und Trennrotor ersetzt wurde. Das Erntegut wird vom Schrägförderer 20 einer Fördertrommel 122 zugeführt, die das Erntegut unterschlächtig einem Einlassübergangsabschnitt 124 des Axialdresch- und Trennrotors zuführt. Stromab des Einlassübergangsabschnitts 124 folgen ein Dreschabschnitt 126 und ein Trennabschnitt 128 des Axialdresch- und Trennrotors. Das ausgedroschene Stroh wird durch eine Auswurftrommel 130 ausgeworfen oder einem Strohhäcksler (nicht gezeigt) zugeführt. Zu weiteren Einzelheiten wird auf die EP 2 055 176 A1 verwiesen.

Unterhalb des Dreschabschnitts 126 ist ein Dreschkorb 132 und unterhalb des Trennabschnitts 128 ein Trennrost 134 angeordnet. Ein Schneckenförderer 140 fördert das durch den Dreschkorb 132 nach unten fallende Korn nach hinten und auf das Vorreinigungssieb 72, während der hintere Förderboden 42 das durch den Trennrost 134 nach unten fallende Erntegut nach vorn fördert und in einer Fallstufe, in der ein Körnerstromsensor 68a angeordnet ist, auf das Vorreinigungssieb 72 abgibt. Ein weiterer oder alternativer Körnerstromsensor 68b ist im rückwärtigen Drittel des Förderbodens 42 angebracht, analog zum Körnerstromsensor 68' der Figur 1.

Bei dieser Ausführungsform erfasst der Körnerstromsensor 68a somit den gesamten, von der Trenneinrichtung, die durch den Trennabschnitt 128 und den Trennrost 134 gebildet wird, abgeschiedenen Körnerstrom. Der Körnerstromsensor 68b erfasst näherungsweise den im hinteren Drittel der Trenneinrichtung abgeschiedenen Körnerstrom. Die Funktionsweise der Anordnung zur Verlustmessung mit der Kontrolleinheit 74, der Anzeigeneinrichtung 76, dem Körnerstromsensor 68a und/oder 68b und dem Gesamtkornflusssensor 78 entspricht jener der Ausführungsform nach Figur 1.

## Patentansprüche

1. Mähdrescher (10) mit:
einer Drescheinrichtung,
einer Trenneinrichtung,
einer Reinigungseinrichtung (46), die ein einlassseitiges, als Vorsieb (72), Förderboden oder Schneckenförderer ausgeführtes Element umfasst, stromab welchem von einem Gebläse (62) mit einem Luftstrom beaufschlagte Siebe (90, 92) angeordnet sind,
einem vorderen Förderer für Korn, der unterhalb der Drescheinrichtung angeordnet und angepasst ist, das von der Drescheinrichtung abgeschiedene Material zu sammeln und dem einlassseitigen Element der Reinigungseinrichtung (46) zuzuführen,
einer hinteren Fördereinrichtung für Korn, welche angepasst ist, das von der Trenneinrichtung abgeschiedene Material zu sammeln und zum vorderen Förderer oder dem einlassseitigen Element der Reinigungseinrichtung (46) zu fördern,
und einer Anordnung zur Verlustmessung, welche mit einem Körnerstromsensor (68, 68', 68", 68a, 68b) zur Erfassung der Intensität eines in der Trenneinrichtung des Mähdreschers (10, 10') abgeschiedenen Körnerstroms und einer Kontrolleinheit (74) zur Berechnung eines Körnerverlustwerts anhand der Signale des Körnerstromsensors (68, 68', 68", 68a, 68b) ausgestattet ist,
wobei der Körnerstromsensor (68, 68', 68", 68a, 68b) der hinteren Fördereinrichtung zugeordnet und konfiguriert ist, den Körnerstrom stromab der hinteren Fördereinrichtung oder innerhalb der hinteren Fördereinrichtung zu erfassen.

2. Mähdrescher (10) nach Anspruch 1, wobei der Körnerstromsensor (68, 68', 68", 68a, 68b) stromab oder innerhalb eines Förderbodens (42) oder einer Rücklaufwanne (70) der Trenneinrichtung angeordnet ist.

3. Mähdrescher (10) nach Anspruch 2, wobei die Trenneinrichtung einen Strohschüttler (32) oder einen Trennrotor umfasst.

4. Mähdrescher (10) nach einem der Ansprüche 1 bis 3, wobei die Kontrolleinrichtung (74) mit einem Gesamtkornflusssensor (78) zur Erfassung des gesamten Kornflusses im Mähdrescher (10, 10') verbunden und betreibbar ist, den Körnerverlustwert anhand der Signale des Körnerstromsensors (68, 68', 68", 68a, 68b) und des Gesamtkornflusssensors (78) zu bestimmen.

5. Mähdrescher (10) nach einem der Ansprüche 1 bis 4, wobei die Kontrolleinrichtung (74) mit zwei an unterschiedlichen Stellen der hinteren Fördereinrichtung angeordneten Körnerstromsensoren (68, 68', 68", 68a, 68b) verbunden und betreibbar ist, anhand der Signale der Körnerstromsensoren (68, 68', 68", 68a, 68b) eine Abscheidekurve und anhand der Abscheidekurve einen Verlustwert zu generieren.

## Claims

1. Combine harvester (10) having:
a threshing device,
a separating device,
a cleaning device (46), which comprises an inlet-side element which is embodied as a pre-conveyor (72), floor or worm conveyor, downstream of which screens (90, 92) to which a stream of air is supplied by a blower (62) are arranged,
a front conveyor for grain which is arranged underneath the threshing device and adapted to collect material which is separated off by the threshing device and to feed said material to the inlet-side element of the cleaning device (46),
a rear conveyor device for grain, which device is adapted to collect material which is separated off by the separating device and to convey said material to the front conveyor or to the inlet-side element of the cleaning device (46),
and an arrangement for loss measurement, which arrangement is equipped with a grain flow sensor (68, 68', 68", 68a, 68b) for sensing the intensity of a grain flow which is separated off in the separating device of the combine harvester (10, 10'), and a control unit (74) for calculating a grain loss value on the basis of the signals of the grain flow sensor (68, 68', 68", 68a, 68b),
wherein the grain flow sensor (68, 68', 68", 68a, 68b) is assigned to the rear conveyor device and configured to sense the grain flow downstream of the rear conveyor device or within the rear conveyor device.

2. Combine harvester (10) according to Claim 1, wherein the grain flow sensor (68, 68', 68", 68a, 68b) is arranged downstream or within a conveyor floor (42) or a return pan (70) of the separating device.

3. Combine harvester (10) according to Claim 2, wherein the separating device comprises a straw walker (32) or a separating rotor.

4. Combine harvester (10) according to one of Claims 1 to 3, wherein the control device (74) is connected to a total grain flow sensor (78) for sensing the total grain flow in the combine harvester (10, 10') and can be operated to determine the grain loss value on the basis of the signals of the grain flow sensor (68, 68', 68", 68a, 68b) and of the total grain flow sensor (78).

5. Combine harvester (10) according to one of Claims 1 to 4, wherein the control device (74) is connected to two grain flow sensors (68, 68', 68", 68a, 68b) which are arranged at different locations on the rear conveyor device and can be operated to generate a separation curve on the basis of the signals of the grain flow sensors (68, 68', 68", 68a, 68b), and a loss value on the basis of the separation curve.

## Revendications

1. Moissonneuse-batteuse (10), avec :
un système de battage,
un système de séparation,
un système de nettoyage (46) qui comprend un élément côté entrée réalisé en tant que pré-crible (72), fond transporteur ou vis transporteuse, en aval duquel sont disposés des cribles (90, 92) exposés à un flux d'air par un ventilateur (62),
un transporteur avant pour grains, qui est disposé au-dessous du système de battage et qui est adapté pour collecter le matériau séparé par le système de battage et pour le conduire à l'élément côté entrée du système de nettoyage (46),
un système de transport arrière pour les grains qui est adapté pour collecter le matériau séparé par le système de séparation et pour le transporter au transporteur avant ou à l'élément côté entrée du système de nettoyage (46),
et un agencement destiné à la mesure des pertes qui est équipé d'un capteur de flux de grains (68, 68', 68", 68a, 68b) destiné à la détection de l'intensité d'un flux de grains séparé dans le système de séparation de la moissonneuse-batteuse (10, 10'), et d'une unité de contrôle (74) destinée au calcul d'une valeur de perte de grains à l'aide des signaux du capteur de flux de grains (68, 68', 68", 68a, 68b),
le capteur de flux de grains (68, 68', 68", 68a, 68b) du système de transport arrière étant affecté et configuré pour détecter le flux de grains en aval du système de transport arrière ou à l'intérieur du système de transport arrière.

2. Moissonneuse-batteuse (10) selon la revendication 1, le capteur de flux de grains (68, 68', 68", 68a, 68b) étant disposé en aval ou à l'intérieur d'un fond transporteur (42) ou d'une cuve de retour (70) du système de séparation.

3. Moissonneuse-batteuse (10) selon la revendication 2, le système de séparation comprenant un batteur de paille (32) ou un rotor de séparation.

4. Moissonneuse-batteuse (10) selon l'une des revendications 1 à 3, le système de contrôle (74) étant raccordé à un capteur de flux de grains global (78) destiné à la détection du flux de grains global dans la moissonneuse-batteuse (10, 10') et pouvant être activé pour définir la valeur de perte de grains à l'aide des signaux du capteur de flux de grains (68, 68', 68", 68a, 68b) et du capteur de flux de grains global (78).

5. Moissonneuse-batteuse (10) selon l'une des revendications 1 à 4, le système de contrôle (74) étant raccordé à deux capteurs de flux de grains (68, 68', 68", 68a, 68b) disposés dans différents emplacements du système de transport arrière et pouvant être activé pour, à l'aide des signaux des capteurs de flux de grains (68, 68', 68", 68a, 68b), générer une courbe de séparation et, à l'aide de la courbe de séparation, une valeur de perte.
